# EUROPEAN PATENT APPLICATION

(11) **EP 2 198 758 A1**
(43) Date of publication of application: **23.06.2010**
(21) Application number: 10158864.8
(22) Date of filing: 07.11.2006
(51) Int. Cl.: A47J 36/06, A47J 36/00

(54) **Cooker cover**

(30) Priority: 07.11.2005 KR 20050105887; 29.12.2005 KR 20050133367; 03.05.2006 KR 20060039779
(62) Divisional of application: 06812456.9
(71) Applicant: Choi, Rena, Goyang-si Gyeonggi-do 412-220 (KR)
(72) Inventor: Choi, Rena, Goyang-si Gyeonggi-do 412-220 (KR)
(74) Representative: Gulde Hengelhaupt Ziebig & Schneider

(57) **Abstract**

A cooker cover adapted to be seated on the top periphery of a cooker, including a transparent viewing panel (80) formed on the top surface thereof for allowing a user to clearly view the interior of the cooler, a plurality of ventilation holes (84) formed equidistantly spaced apart from one another along a side wall thereof, and a door (90) formed openably on one side of the side wall thereof, wherein the cooker cover (20) includes an oil drain groove (87) formed along the lower portion of the side wall thereof for guiding the flow of oil, the oil drain groove (87) has a plurality of oil drain holes (88) equidistantly spaced apart from one another along the side wall thereof, for discharging the oil toward the cooker.

## Description

The present invention relates to a cooker cover, and more particularly, to a cooker cover that enables a food material in a cooker to be obviously seen by a user's naked eyes during cooking and further enables the food material to be turned over in the cooker or withdrawn from the cooker, even without opening the cooker cover, thereby making it very convenient to cook.

While cooking like frying or fish-broiling is done in a cooker such as a pot, a frying pan, and so on, generally, oil scatters to the outside of the cooker, which undesirably causes a risk of fire or burn. To prevent the occurrence of the fire or burn, thus, a cover should be seated on the top periphery of the cooker during cooking.

In this case, the oil in the cooker is relatively not scattered to the outside of the cooker, but it is very difficult to check whether a food material in the cooker is cooked well or not. Moreover, the steam generated from the food material in the cooker during cooking is not emitted such that the cooking state of the cooked food material is not good. To solve these problems, thus, if the cover is separated from the top of the cooker, the oil is scattered to cause fire or burn or to make the surrounding places dirty with stains.

Further, while the cover is removed from the top of the cooker, the food material should be turned over or the cooking state thereof should be checked, which makes it very inconvenient to cook, and additionally, since several covers should be prepared in accordance with the different sizes of the cookers, there is a need for relatively large space capable of keeping the different sizes of covers thereinto.

Accordingly, the present invention has been made to solve the above-mentioned problems, and it is an object of the present invention to provide a cooker cover that enables a food material in a cooker to be obviously seen by a user's naked eyes during cooking, enables the food material to be turned over in the cooker even without opening the cooker cover in a state where the cooker cover is seated on the top periphery of a cooker, and prevents oil from being scattered to the outside of the cooker during cooking, thereby making it very convenient to cook and preventing the surrounding places from being stained.

It is another object of the present invention to provide a cooker cover that enables the steam generated from a food material during cooking to be emitted to the outside, thereby making the cooking state of the food material very desirable and improving the taste of the cooked food material.

It is still another object of the present invention to provide a cooker cover that can be applied to different sizes of cookers, thereby reducing the purchase costs and minimizing the space for keeping the different sizes of covers really.

To achieve the above objects, according to the present invention, there is provided a cooker cover adapted to be seated on the top periphery of a cooker, including a transparent viewing panel formed on the top surface thereof for allowing a user to clearly view the interior of the cooler, a plurality of ventilation holes formed equidistantly spaced apart from one another along a side wall thereof, and a door formed openably on one side of the side wall thereof, wherein the cooker cover includes an oil drain groove formed along the lower portion of the side wall thereof for guiding the flow of oil, the oil drain groove has a plurality of oil drain holes equidistantly spaced apart from one another along the side wall thereof, for discharging the oil toward the cooker.

Preferably, the cooker cover has a plurality of retaining steps formed in a stepped manner along the outer periphery of the side wall thereof such that the cooker cover is seated to correspond to different sizes of cookers.

The door may include a plurality of ventilation holes formed thereon.

In a preferred embodiment, each of the plurality of ventilation holes formed on the side wall of the cooker cover and the door includes an oil scattering-preventing protrusion formed protruded inwardly at the inside thereof.

According to the present invention, there is provided a cooker cover that enables a food material in a cooker to be turned over in the cooker or withdrawn from the cooker through an opening formed cut thereon, while the cooker cover is seated on the top periphery of the cooker during cooking, thereby making it very convenient to cook, that enables the steam generated in the cooker to be emitted through an outer door and a plurality of ventilation holes formed on the outer door, thereby improving the taste of the cooked food material, and that prevents oil from being scattered to the outside of the cooker during cooking, thereby making the surrounding places from being maintained in a clean state and preventing a fire or burn from occurring.
FIG.1 is a separated perspective view showing a cooker cover according to a first embodiment of the present invention;
FIG.2 is a sectional view showing the assembled state of the cooker cover according to the first embodiment of the present invention;
FIG.3 is a partly enlarged sectional view showing the cooker cover according to the first embodiment of the present invention; and
FIG.4 is another partly enlarged sectional view showing the cooker cover according to the first embodiment of the present invention;
FIG.5 is a sectional view showing the assembled state of a cooker cover according to a second embodiment of the present invention;
FIG.6 is a sectional view showing the main parts of the cooker cover according to the second embodiment of the present invention;
FIG.7 is a sectional view showing a variation of the cooker cover according to the second embodiment of the present invention;
FIG.8 is a separated perspective view showing further features of a cooker cover;
FIG.9 is a sectional view showing the use state of the cooker cover of figure 8;
FIG.10 is a sectional view showing a variation of the further features of the cooker cover;
FIG.11 is a sectional view showing another variation of the further features of the cooker cover.

Now, an explanation on a cooker cover according to preferred embodiments of the present invention will be given in detail with reference to the attached drawings.

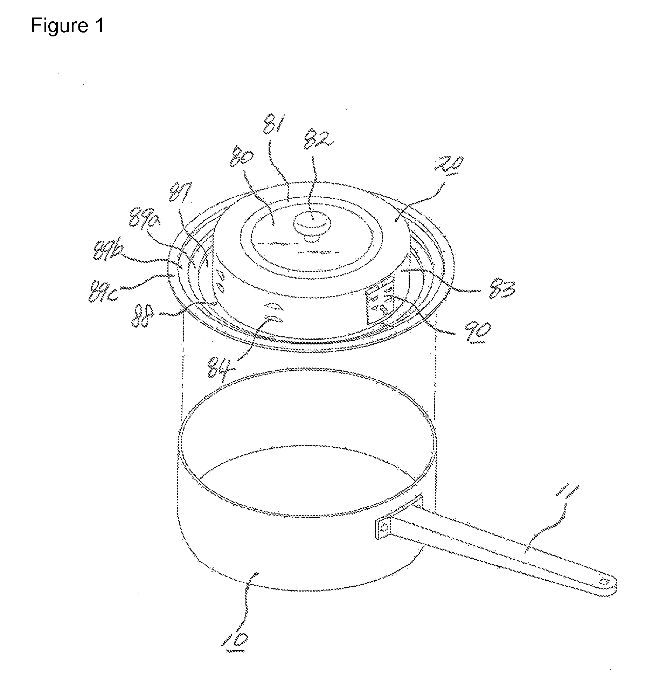

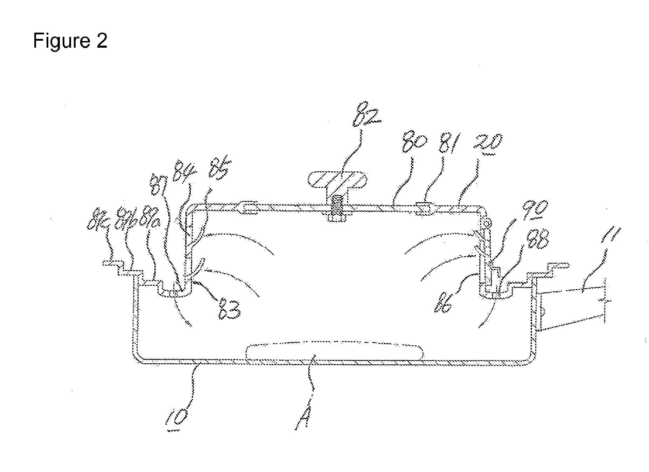

FIGS.1 to 4 show a cooker cover according to a first embodiment of the present invention, wherein the cover 20 is seated on the top periphery of the cooker 10.

The cover 20 has a transparent viewing panel 80 formed on the top surface thereof in such a manner as to be coupled to a coupling part 81, the transparent viewing panel 80 being made of glass allowing a user to clearly view the interior of the cooker, and further has a knob 82 formed on the top end of the transparent viewing panel 80.

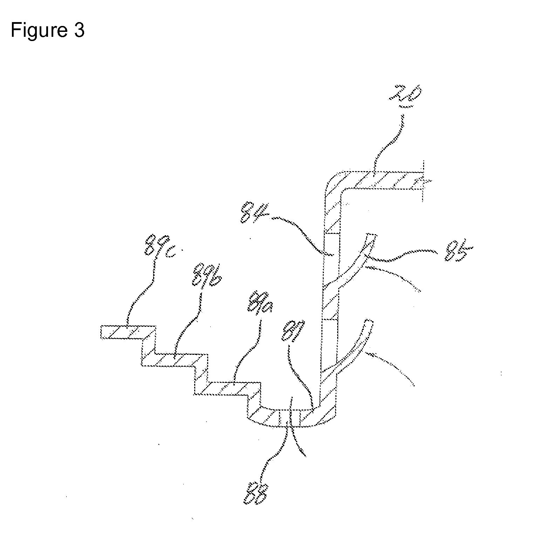

The cover 20 further has a plurality of ventilation holes 84 equidistantly spaced apart from one another along a side wall 83 thereof, for emitting the steam generated in the interior thereof, and as shown in FIG.3, each of the plurality ventilation holes 84 has an oil scattering-preventing protrusion 85 protruded upwardly at the front ends thereof on the inner side thereof, for preventing the oil scattered in the cover 20 from being discharged to the outside of the cover 20.

Further, the side wall 83 has an opening 86 formed on one side thereof, and the opening 86 has a door 90 coupled openably thereto.

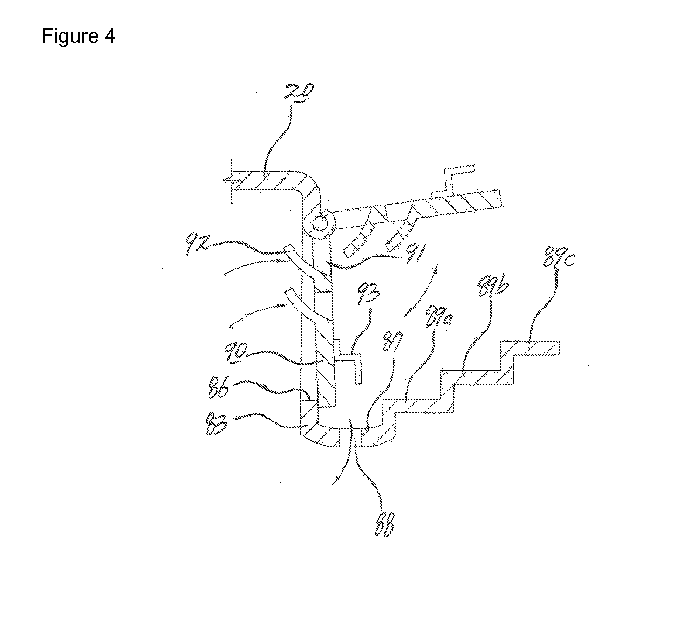

As shown in FIG.4, the door 90 has a plurality of ventilation holes 91 formed thereon, for emitting the steam generated into the cover 20 to the outside, and each of the plurality of ventilation holes 91 has an oil scatting-preventing protrusion 92 protruded upwardly at the front end thereof on the upper or lower side thereof.

The door 90 has a hand grip 93 formed on the outer surface thereof, thereby making it easy to open by a user's finger.

On the other hand, the side wall 83 has an oil drain groove 87 formed along the outer periphery of the lower side thereof, and the oil drain groove 87 has a plurality of oil drain holes 88 equidistantly spaced apart from one another there along, for discharging the oil toward the cooker 10.

The oil drain groove 87 is provided with a plurality of retaining steps 89a to 89c formed in a stepped fashion at the outer periphery thereof, for making the cover 20 coupled to the cooker 10 in accordance with various sizes of cookers 10.

The plurality of retaining steps 89a to 89c are desirably formed in a stepped fashion upwardly from the oil drain groove 87.

In the first embodiment of the present invention, at the state where the food material A is put into the cooker 10 the cover 20 is seated on the top periphery of the cooker 10 and the cooking starts by using cooking equipment like an oven.

At this time, the cover 20 can be coupled to different sizes of cookers 10 by the formation of the plurality of retaining steps 89a to 89c on the outer periphery thereof, thereby making the purchasing costs for the cover and the space for keeping the covers desirably reduced.

Further, the steam generated in the cooker 10 during cooking is emitted to the outside through the plurality of ventilation holes 84 and 91 formed on the side wall 8 and the door 90 of the cover 20, thereby making the cooking state of the food material A substantially good, and after cooking, the cooked food material A tastes good.

Further, the interior of the cooker 10 can be seen through the transparent viewing panel 80 during cooking, thereby making the food material A checked at any time and thus preventing the food material A from being burnt.

Additionally, if the door 90 is opened at the state where the cover 20 is seated on the top periphery of the cooker 10, tools like chopsticks are inserted through the opening 86 to turn over the food material A in the cooker 10 or draw it from the cooker 10, thereby making it convenient to cook.

The oil scattered in the cover 20 during frying is not scattered to the outside by means of the plurality of oil scattering-preventing protrusions 85 and 92 formed on the inner sides of the plurality of ventilation holes 84 and 91.

The oil colliding with the oil scattering-preventing protrusions 85 and 92 during cooking flows to the lower side of the cover 20, and after guided to the oil drain groove 87, it drips through the oil drain hole 88 to the interior of the cooker 10, which prevents the oil from scattering to the outside. Thus, a danger of making a fire or burn can be previously prevented and a quantity of oil consumption can be greatly reduced.

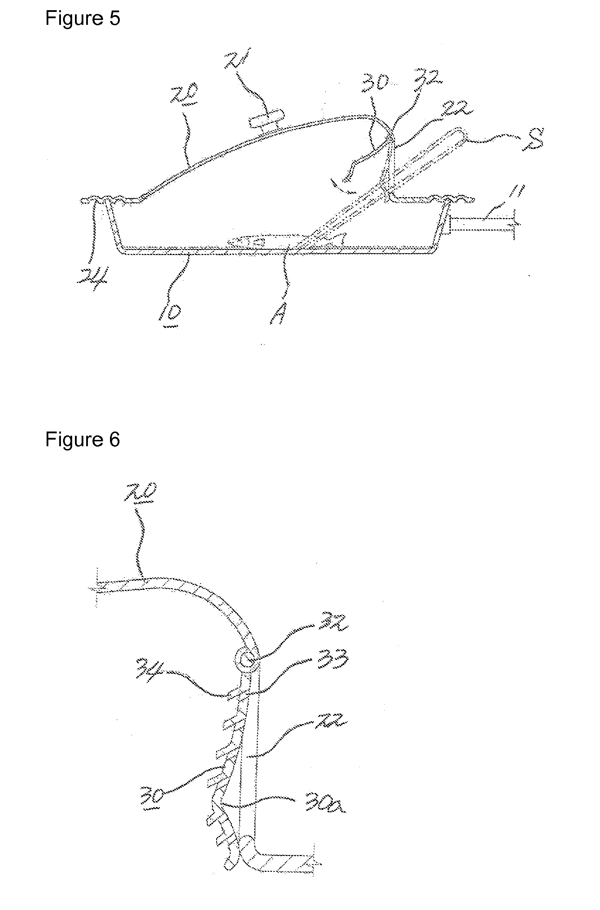

FIGS.5 to 7 show a cooker cover according to a second embodiment of the present invention, wherein FIG.5 is a sectional view showing the assembled state of the cooker cover according to the second embodiment of the present invention.

In the second embodiment of the present invention, the parts corresponding to those of the first embodiment of the present invention are indicated by corresponding reference numerals, and therefore, an explanation on them will be avoided for the brevity of this invention.

The cover 20 has a plurality of retaining grooves 24 formed along the outer periphery thereof in such a manner as to conform with the different sizes of the cookers 10, and the top periphery of the cooker 10 can be inserted and mounted along the retaining groove 24 of the cover 20 corresponding to its size, thereby making it possible to employ a single cover for various sizes of cookers 10.

The outer door 30 is coupled to the opening 22 of the cover 20 in such a manner as to be opened to the inside of the cover 20, and thus, when the outer door 30 is pushed by using chopsticks S, it can be easily opened, which makes it convenient to use.

The outer door 30 has a curved portion 30a formed at the lower side thereof for allowing the air into the cooker to flow to the outside through the opening 22, such that the steam generated into the cooker 10 can be emitted to the outside of the cover 20.

Also, the outer door 30 is rotatably inserted into a hinge pin 32 of the hinge part 23 formed on the top side of the opening 22 and has a plurality of ventilation holes 33 formed thereon.

Further, the outer door 30 has a plurality of oil scattering-preventing protrusions 34 formed at the inside thereof, for keeping the oil in the cooker 10 from being scattered to the outside of the cover 20.

In the preferred second embodiment of the present invention, the steam generated in the cover 20 during cooking is emitted to the outside through the curved portion 30a and the plurality of ventilation holes 33 of the outer door 30, thereby improving a quality of cooking and taste of the food material, and the oil in the cover 20 is not scattered to the outside by means of the plurality of oil scattering-preventing protrusions 34 formed on the inside of the outer door 30, thereby preventing the oil from being scattered to the outside of the cover 20.

Therefore, the fire or burn that may be caused when the oil is scattered to the outside can be completely prevented, and the contamination of surrounding places by the scattered oil from the cooker can be greatly reduced.

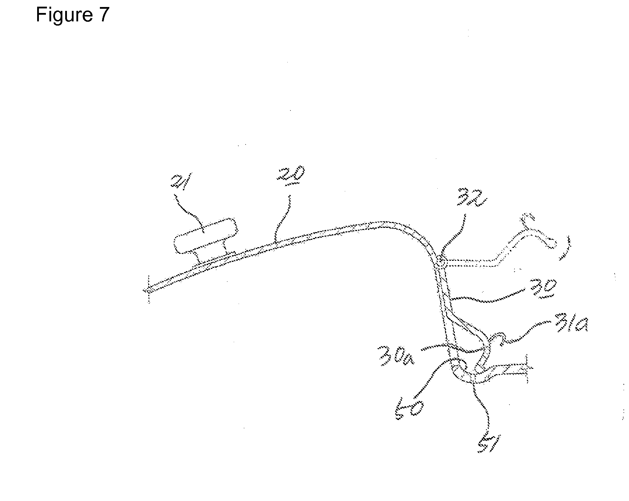

On the other hand, FIG.7 shows an important feature of the cooker cover according to the second embodiment of the present invention, wherein the outer door 30 is formed in such a manner as to be opened to the outside of the opening 22 and has a pulling handle 31 a formed on the outer surface thereof, for making the outer door 30 easily opened.

Further, the cover 20 has a concaved oil gathering portion 50 formed at the portion at which the lower end of the outer door 30 is mounted, and the oil gathering portion 50 has an oil drain hole 51 formed at the bottom end thereof, for discharging the oil sucked and dripped to/from the inner surface of the outer door 30.

Thus, the oil scattered into the cooker 10 and the cover 20 during cooking is sucked onto the inner surface of the outer door 30 and dripped to the oil gathering portion 50, and after that, the oil that gathers into the oil gathering portion 50 is discharged to the oil drain hole 51 for flowing to the cooker 10 again, thereby preventing the oil from being scattered and discharged to the outside.

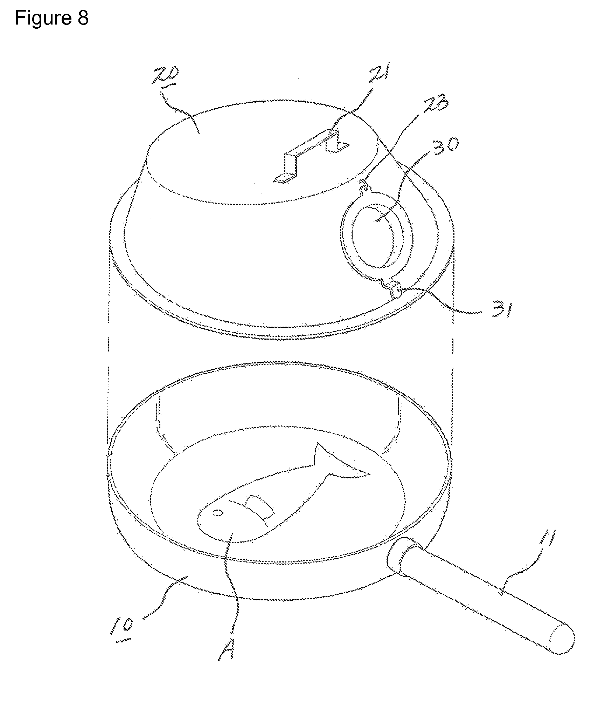

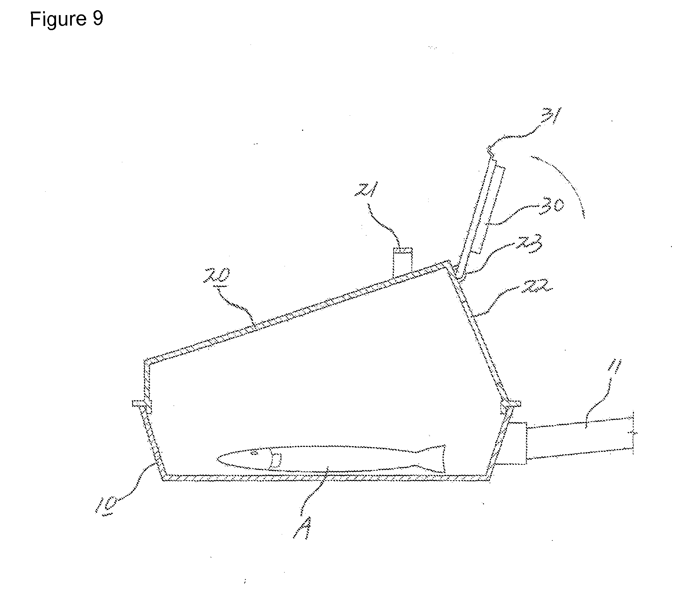

FIG.8 is a separated perspective view showing further features of a cooker cover, and FIG.9 is a sectional view showing the use state of the cooker cover according to the cooker cover of figure 8, wherein a cooker cover 20 is seated on a cooker 10 with an opened top portion along the top periphery of the cooker 10.

The cooker 10 is coupled at one side to a hand grip 11, and the hand grip 11 may be mounted on one or both sides of the cooker 10.

The cover 20 is formed inclinedly in such a manner as to be gradually narrowed toward the top side thereof, having a knob 21 formed on the top surface thereof, an opening 22 formed cut on one side thereof, and an outer door 30 coupled openably to the outside of the opening 22.

The cover 20 may be formed of glass or a metal material, but desirably, it is formed of transparent glass such that the interior of the cooker 10 can be seen.

The outer door 30 is coupled openably with a hinge part 23 formed on the cover at the top side thereof and has a pulling handle 31 formed at the bottom side thereof in such a manner as to be easily opened when the pulling handle 31 is manipulated by a cook's finger.

In the preferred embodiment of the present invention, at the state where the cooker 10 is mounted on heating equipment like an oven and a food material A to be cooked is put at the inside of the cooker 10, cooking for the food material A starts.

If the food material A to be cooked into the cooker 10 is heated, the outer door 30 is opened to check the current cooking state of the food material A through the opening 22, and for example, if fish is broiled in the cooker 10, chopsticks are inserted into the cooker 10 through the opening 22 to turn the fish over in the cooker 10 or draw the completely cooked fish from the cooker 10, which makes it convenient and easy to cook.

On the other hand, if the food material is fried in the cooker 10, the outer door 30 is opened to check the current cooking state of the food material A through the opening 22, and the chopsticks are inserted into the cooker 10 through the opening 22 to turn the food material A over in the cooker 10 or draw the food material A from the cooker 10 when the food material A is completely cooked.

In the state where the cover 20 is seated on the top periphery of the cooker 10, further, if the outer door 30 is closed, oil is not scattered from the inside of the cooker 10 to the outside thereof, which prevents a fire or burn from occurring and keeps the surrounding places from being contaminated with stains.

Moreover, if the outer door 30 is opened during the cooking, the steam generated from the food material A is emitted such that the cooking state of the food material A becomes good.

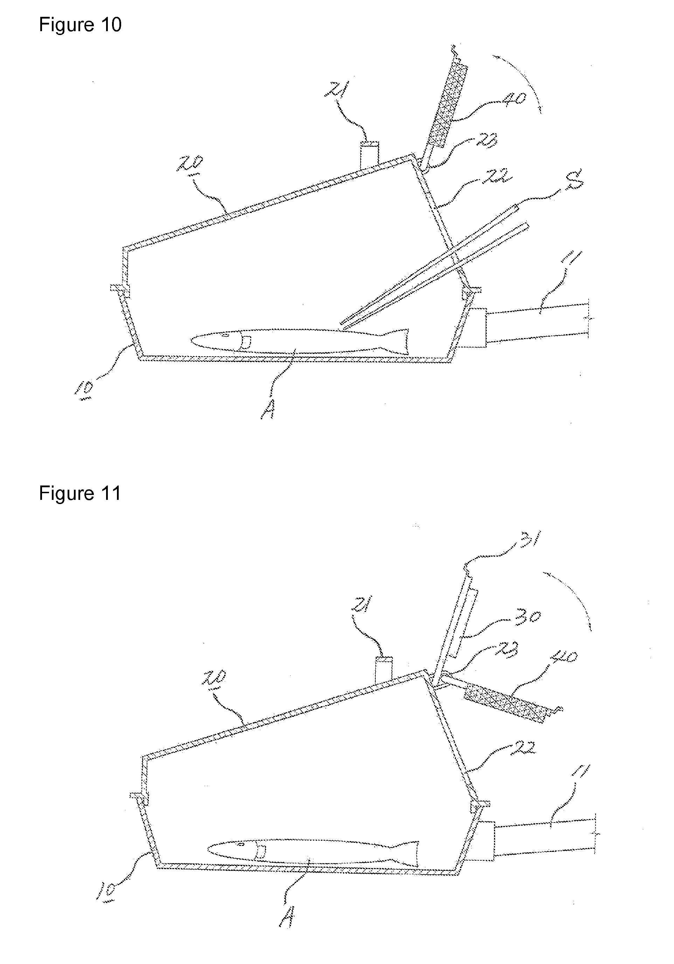

In the preferred embodiment of the present invention, the outer door 30 is openably coupled to the opening 22 of the cover 20, but is not limited thereto, and as shown in FIG. 10, an inner door 40 may be coupled to the hinge part 23 formed on the outside of the opening 22, the inner door 40 being formed of a metal mesh for flowing air therethrough.

Therefore, there are some advantages in that the steam generated from the food material A into the cooker 10 is gently emitted to the outside of the cover 20, that the oil is not scattered to the outside during cooking, and that chopsticks S are inserted through the opening 22 to turn the food material A over in the cooker 10 or draw the cooked food material A from the cooker 10.

Further, as shown in FIG.11, the hinge part 23 formed on the outside of the opening 22 of the cover 20 is coupled to the inner door 40 formed of the metal mesh and to the outer door 30 formed closable, such that the inner door 40 and the outer door 30 are opened.

Therefore, when the outer door 30 is opened, the steam generated during cooking is gently emitted through the inner door 40 made of the metal mesh, thereby improving the taste of the food material A and preventing the oil from being scattered to the outside, and when the outer door 30 and the inner door 40 are all opened, the food material A is turned over in the cooker 10 or withdrawn from the cooker 10 by using the chopsticks.

The invention has been described in al illustrative manner. It is to be understood that the terminology which has been used is intended to be in the nature of words of description rather than of limitation. Many modifications and variations of the invention are possible in light of the above teachings. Therefore, within the scope of the appended claims, the invention may be practiced other than as specifically described.

As described above, the cooker cover of the present invention is applicable to all kinds of cookers like frying pans, pots, and the like.

## Claims

1. A cooker cover adapted to be seated on the top periphery of a cooker, including a transparent viewing panel (80) formed on the top surface thereof for allowing a user to clearly view the interior of the cooler, a plurality of ventilation holes (84) formed equidistantly spaced apart from one another along a side wall thereof, and a door (90) formed openably on one side of the side wall thereof,
**characterised in that,**
the cooker cover (20) includes an oil drain groove (87) formed along the lower portion of the side wall thereof for guiding the flow of oil, the oil drain groove (87) has a plurality of oil drain holes (88) equidistantly spaced apart from one another along the side wall thereof, for discharging the oil toward the cooker.

2. The cooker cover according to claim 1, wherein the cooker cover (20) has a plurality of retaining steps (89a, 89b, 89c) formed in a stepped manner along the outer periphery of the side wall thereof such that the cooker cover (20) is seated to correspond to different sizes of cookers.

3. The cooker cover according to claim 1, wherein the door (90) includes a plurality of ventilation holes (91) formed thereon.

4. The cooker cover according to claim 1 or 3, wherein each of the plurality of ventilation holes (84) formed on the side wall of the cooker cover (20) and the door (90) includes an oil scattering-preventing protrusion (92) formed protruded inwardly at the inside thereof.
